# EUROPÄISCHE PATENTANMELDUNG

(11) **EP 1 632 461 A1**
(43) Veröffentlichungstag der Anmeldung: **08.03.2006**
(21) Anmeldenummer: 04104286.2
(22) Anmeldetag: 06.09.2004
(51) Int. Cl.: C04B 20/10

(54) **Verfahren zum Herstellen eines beschichteten Grundstoffes für eine hydraulische Zusammensetzung, beschichteter Grundstoff zur Betonherstellung, Zusatzmittel für die Betonherstellung und Verfahren zum Herstellen einer hydraulischen Zusammensetzung**

(71) Anmelder: Sika Technology AG, 6340 Baar (CH)
(72) Erfinder: Bleibler, Alexander, 8406 Winterthur (CH); Mäder, Urs, 8500 Frauenfeld (CH)
(74) Vertreter: Isler, Jörg

(57) **Zusammenfassung**

Die Erfindung betrifft ein Verfahren zum Herstellen eines beschichteten Grundstoffes für eine hydraulischen Zusammensetzung (11), wobei die hydraulischen Zusammensetzung einen Grundstoff (14, 16) und Wasser (15) umfasst, wobei der Grundstoff aus mehreren Untergruppen (14, 16) bestehen kann und mindestens ein hydraulisches Bindemittel (14) umfasst und wobei zur Herstellung der hydraulischen Zusammensetzung der Grundstoff (14, 16) und das Wasser (15) in einem Mischer (8) gemischt werden. Vor dem Mischen der hydraulischen Zusammensetzung wird der Grundstoff (14, 16) zumindest teilweise mit einem Zusatzmittel (13) beschichtet.

Des weiteren betrifft die Erfindung einen beschichteten Grundstoff zur Betonherstellung, ein Zusatzmittel für die Betonherstellung und ein Verfahren zum Herstellen einer hydraulischen Zusammensetzung.

## Beschreibung

### Technisches Gebiet

Die Erfindung betrifft ein Verfahren zum Herstellen eines beschichteten Grundstoffes für eine hydraulische Zusammensetzung nach dem Oberbegriff des ersten Anspruches.
Des weiteren betrifft die Erfindung einen beschichteten Grundstoff zur Betonherstellung, Zusatzmittel für die Betonherstellung und Verfahren zum Herstellen einer hydraulischen Zusammensetzung nach den Oberbegriffen der weiteren unabhängigen Ansprüche.

### Stand der Technik

Der Werkstoff Zement wird in der Regel aus Zementklinker gewonnen. Dabei wird der Zementklinker, das Vorprodukt aus dem Zementdrehrohrofen, zum Zementpulver gemahlen, dann mit Gips, der als Abbinderegler fungiert, vermischt, wobei durch den Mischvorgang das Endprodukt Zement entsteht. Der gewonnene Zement wird nach der Herstellung in Silos gelagert. Bei der Weiterverarbeitung zu Beton wird der Werkstoff Zement mit Zuschlagstoffen und chemischen Zusatzmitteln vermengt. Beispielswiese wird der Zement zusammen mit Wasser, Gestein und weiteren Additiven in einem meist computergesteuerten mechanischen Rührwerk gemischt. Durch die Zugabe der flüssigen oder pulverförmigen Zusatzmittel sollen die Eigenschaften des Betons in chemischer und/oder physikalischer Hinsicht verbessert werden. So können die Zusatzmittel beispielsweise die Fliesseigenschaft, die Viskosität, das Verdichtungsverhalten und das Abbindverhalten des Betons beeinflussen.

### Darstellung der Erfindung

Der Wettbewerb im Bereich der chemischen Zusatzmittel erfordert bessere und einfachere Verarbeitungstechnologien und gleichzeitige Produktverbesserungen. Zusätzlich sollten auch die Eigenschaften des Betons sowie dessen Verarbeitbarkeit weiter verbessert werden.

Es stellte sich daher die Aufgabe, ein Verfahren zur Herstellung eines beschichteten Grundstoffes für eine hydraulische Zusammensetzung, einen beschichteten Grundstoff zur Betonherstellung, ein Zusatzmittel für die Betonherstellung und Verfahren zum Herstellen einer hydraulischen Zusammensetzung zur Verfügung zu stellen, die eine einfache Verarbeitungstechnologie und/oder eine erhöhte Qualität des Betons zur Folge haben.

Erfindungsgemäss wird dies durch die Merkmale der unabhängigen Ansprüche erreicht.

Kern der Erfindung ist es also, dass vor dem Mischen der hydraulischen Zusammensetzung der Grundstoff zumindest teilweise mit einem Zusatzmittel beschichtet wird, respektive dass das Zusatzmittel zumindest teilweise auf einem Grundstoff für die Betonherstellung angeordnet ist.

Die Vorteile der Erfindung sind unter anderem darin zu sehen, dass die Eigenschaften des Betons wesentlich verbessert werden können, wenn vor dem Mischen der Betoneinzelkomponenten zumindest einzelne dieser Komponenten beschichtet werden.

Hierdurch kann beispielsweise bei den Partikeln des Grundstoffes Zement die physikalischen und chemischen Eigenschaften vor dem Mischen verändert werden und die chemische Reaktion mit den andern Grundstoffen im Mischvorgang beeinflusst werden. Beispielsweise werden hier nicht abschliessend einige Zusatzmittel, aus deren Namen meist die Wirkung hervorgeht, aufgezählt: Betonverflüssiger, Fliessmittel, Luftporenbilder, Verzögerer, Beschleuniger, Stabilisierer, Chromatreduzierer, Einpresshilfen, Schaumbildner, Dichtungsmittel und Recyclinghilfen. Wird beispielsweise der Zement vor dem Mischen mit den anderen Grundstoffen mit einem Betonverflüssiger beschichtet, so kann die Wasseraufnahme des beschichteten Zements im Vergleich zum unbehandelten Zement positiv beeinflusst werden.

Es ist zu betonen, dass es prinzipiell möglich ist, alle Stoffe, die für die Herstellung des Betons verwendet werden, zu beschichten. Die Beschichtung der Partikel kann vorteilhafterweise dort erfolgen, wo die Stoffpartikel pneumatisch gefördert werden. Das heisst der Beschichtungsprozess muss nicht notwendigerweise bei der Herstellung des Betons erfolgen. Die Grundstoffe können also am Ort ihrer Herstellung bereits beschichtet werden. So können beispielsweise die Zementpartikel direkt am Ende des Zementherstellungsprozesses beschichtet werden.

Als weitere Untergruppe der Grundstoffe können auch Stoffe oder Zusatzstoffe, wie zum Beispiel Silikafume, Flugasche, Leichtzuschlag, Schlacke, Fasermaterialien, z.B. Polypropylenfasern, usw. verwendet werden. So hat zum Beispiel Flugasche unterschiedlicher Herkunft unterschiedliche Adsorptionseigenschaften und weist somit je nach Herkunft unterschiedliche Eigenschaften im Beton auf. Bei Beschichtung mit Zusatzmitteln ergeben sich identische und angepasstere Eigenschaften, so dass die unterschiedliche Herkunft nicht mehr berücksichtigt werden muss.

Alternativ oder ergänzend zur Beschichtung einer Untergruppe der Grundstoffe kann es auch günstig sein, vor dem Mischen, Partikel von zwei oder mehreren Untergruppen durch zumindest ein Zusatzmittel zu beschichten. Hierdurch wird der Verbund zwischen den beschichteten Ausgangsstoffen und dem Zementleim erheblich verbessert. Dies hat positive Auswirkungen auf die Tausalzbeständigkeit und Dauerhaftigkeit des Betons. Zusätzlich ergibt sich ein positiver Einfluss auf die Rheologie beziehungsweise die rheologischen Eigenschaften des Betons, so werden kürzere Mischzeiten und bessere Kompatibilität mit den Zusatzmitteln erreicht.

Wird das Zusatzmittel mit einer Düse und/oder einem Mischer in die Strömung der Grundstoffe eingedüst, so kann eine besonders homogene und gleichmässige Beschichtung der Partikel erreicht werden. Die Düsen und/oder Mischer gewährleisten auch, dass je nach Düsen- und Mischerdimensionierung eine besonders hohe Relativgeschwindigkeit zwischen Beschichtungsmittel und Partikel und somit eine hohe Adsorption der Beschichtungsmittel eingestellt werden kann. Beispielswiese werden nachfolgend einige geeignete pneumatische Düsen und/oder mechanische Mischer aufgezählt: Strahlmischer mit Laval-Düse, Strahlmischer mit Venturirohr, Strahlmischer mit Propellermischer, Strahlpumpe und verschiedene Wirbelmischer. Bei den mechanischen Mischern wäre zum Beispiel der Rotationsmischer mit Schnecke und der Trommelmischer zu nennen.

Das Zusatzmittel kann entweder in Strömungsrichtung und/oder gegen die Strömungsrichtung der Grundstoffe eingedüst werden. Wird beispielsweise der Winkel der Eindüsung variiert, so kann hierdurch die Kollisions- und Relativgeschwindigkeit von Beschichtungsstoff und zu beschichtenden Teilchen eingestellt werden.

Es ist günstig, wenn das Zusatzmittel zumindest teilweise in flüssiger Form zugesetzt wird. Beispielsweise kann das flüssige Zusatzmittel vorher zerstäubt (Aerosol) und/oder zertropft (Tropfen) und/oder verdampft (Dampf) werden. Durch die unterschiedliche Konsistenz kann die Beschichtungsdicke eingestellt werden.

Das flüssige Zusatzmittel kann mit einem Lösungsmittel, vorzugsweise Wasser, gemischt zugeführt werden, wobei das Lösungsmittel nach der Zufuhr verdampft. Die Eindüsung und Zerstäubung von Zusatzmitteln mit Hilfe von Luft ist dann besonders günstig, wenn der Zement in eine pneumatische Transportleitung in den mechanischen Mischer gefördert wird. Erfolgt die Eindüsung der Flüssigzusatzmittel im Gleichstrom, wie bei sogenannten Strahlwäschern, die zum Reinigen von Staub beladener Abluft eingesetzt werden, kann man sich sowohl den Anlagerungseffekt von Zementpartikeln an Zusatzmitteltröpfchen als auch den Abscheideffekt zunutze machen. Die Transportluft für den Zement kann bezüglich der Temperatur und Feuchtigkeit kontrolliert eingestellt werden. Es genügen dann Temperaturen im Bereich von einigen 10 Grad Celsius zur Verdampfung des Lösungsmittels des Zusatzmittels. Das hat den gewünschten Effekt, dass das Zusatzmittel und der Zement noch nicht reagieren, weil das Wasser mit der pneumatischen Transportluft für den Zement entzogen wurde. Das Aufeinandertreffen von Zusatzmitteltröpfchen und Zementpartikel bewirkt nicht nur eine Partikelbeschichtung. Die Feinverteilung von zerdüsten Zusatzmitteln in einer pneumatischen Zement-Luft-Transportleitung ergibt auch eine homogene Mischung der beiden chemischen Reaktionspartner.

Das Zusatzmittel kann aber auch zumindest teilweise in Pulverform zugesetzt werden. Dies erlaubt die Zugabe von Zusatzmitteln, die in flüssiger Form nicht zugegeben werden können.

Zumindest an der Eindüsungsstelle sollte eine turbulente Strömung der Grundstoffe und/oder des eingedüsten Zusatzmittels erzeugt werden.

Als Zusatzmittel können beispielsweise Betonverflüssiger, Fliessmittel, (Reaktions-)Verzögerer, Beschleuniger, wie Erstarrungs- und Erhärtungsbeschleuniger, Stabilisierer, Luftporenbildner und/oder Dichtungsmittel verwendet werden, die die chemischen und/oder physikalischen Eigenschaften bei der Reaktion der Komponenten zum Beton beeinflussen.

Es ist vorteilhaft, als Zusatzmittel einen Hochleistungsbetonverflüssiger, vorzugsweise das Produkt ViscoCrete® der Firma Sika®, zu verwenden. Dieser Hochleistungsbetonverflüssiger vermindert den Wasseranspruch von Zement und verbessert die Verarbeitbarkeit des Betons.

Als zu beschichtender Grundstoff kann jeder Grundstoff, der für die weitere Herstellung zum Beton verwendet wird, verwendet werden. Wie bereits weiter oben erwähnt, ist der Beschichtungsprozess nicht lokal oder zeitlich an den Betonherstellungsprozess gebunden, so dass eine Beschichtung auch am Herstellungsort beziehungsweise zur Herstellungszeit der Grundstoffe erfolgen kann. Es können beispielsweise pneumatische Düsen und/oder mechanische Mischer, die in den Förderleitungen oder Lagerstätten der Grundstoffe eingebaut sind, eine entsprechende Beschichtung der Grundstoffe ermöglichen.

### Kurze Beschreibung der Zeichnungen

Im Folgenden werden anhand der Zeichnungen Ausführungsbeispiele der Erfindung näher erläutert. Gleiche Elemente sind in den verschiedenen Figuren mit den gleichen Bezugszeichen versehen. Die Strömungsrichtung beziehungsweise die Geschwindigkeit der Medien ist mit Pfeilen angegeben.

Es zeigen:
- Fig. 1: Bekannter Betonmischvorgang im Betonwerk;
- Fig. 2: Schematische Darstellung des Betonmischvorgangs;
- Fig. 3: Zementpartikel und Molekül eines Betonverflüssigers vor der Adsorption;
- Fig. 4: Zwei Zementpartikel mit adsorbierten Betonverflüssigermolekülen;
- Fig. 5: Schematische Darstellung einer Variante des neuen Betonmischverfahrens;
- Fig. 6: Weitere Variante des neuen Betonmischvorgangs;
- Fig. 7: Ausschnitt von einem Anlagenteil zur Zementherstellung und Zementsilos;
- Fig. 8: Schnitt durch einen Gleichstrommischer;
- Fig. 9: Schnitt durch einen Gegenstrommischer;
- Fig. 10: Schnitt durch einen Wirbelschichtmischer mit Rotationszerstäuber.

Es sind nur die für das unmittelbare Verständnis der Erfindung wesentlichen Elemente gezeigt.

### Weg zur Ausführung der Erfindung

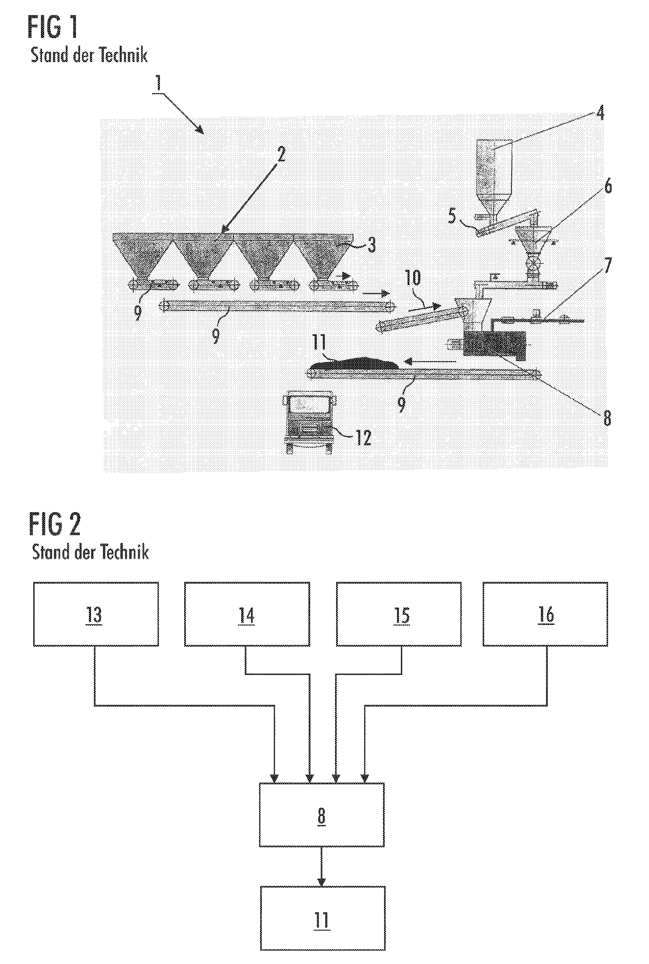

Die **Figur 1** zeigt den bekannten Betonmischvorgang bei der Betonherstellung, wie er meist im Betonwerk 1 abläuft. Links in Figur 1 ist die Vorrichtung 2 zur Gesteinsdosierung dargestellt. In dieser Ausführung besteht diese aus vier trichterförmigen Behältern 3, die jeweils im unteren Öffnungsbereich ein Förderband 9 zum Transport des Gesteins zum mechanischen Mischer 8 aufweisen. Die Förderrichtung oder Laufrichtung der Förderbänder 9 wird durch die Pfeile mit dem Bezugszeichen 10 symbolisiert. Das Gestein hat je nach herzustellendem Beton eine Korngrösse ungefähr 0 bis 16 Millimetern Durchmesser. Das Gestein kann beispielsweise nach Grösse sortiert in den vier Behältern 3 gelagert sein. Das Bindemittel des Betons, der Zement, der eine Partikelgrösse im Bereich von ungefähr 1 bis 100 Mikrometer aufweist, wird im Zementsilo 4 gelagert. Über Fördereinheiten 5, zum Beispiel motorbetriebene Schneckenantriebe, wird auch der Zement zum mechanischen Mischer 8 gefördert. Eine Dosierung der Zementmenge findet in der Behälterwaage 6 statt. Am mechanischen Mischer 8 befindet sich gleichzeitig die Zufuhrleitung 7 für Wasser und Zusatzmittel, wie zum Beispiel Betonverflüssiger, Fliessmittel, Luftporenbildner, Verzögerer und dergleichen, für den Mischvorgang beigemengt werden. Im mechanischen Mischer 8, der hier ein Durchlaufmischer mit horizontalem Rührwerk darstellen soll, werden also das Gestein, das Wasser, der Zement und das Zusatzmittel zu einer fertigen Betonmischung 11 gemischt. Über ein Förderband 9 wird der fertige Beton 11 zu Transportfahrzeugen 12 gefördert.

In **Figur 2** wird der Mischvorgang zur Herstellung von Beton nochmals schematisch und vereinfacht dargestellt. Im oberen Bereich der Figur 2 stellen die vier Kästchen die Ausgangskomponenten des Betons, nämlich die Zusatzmittel 13, den Grundstoff 14, 16 aufgeteilt in die Untergruppen 14, z.B. Sand und/oder gestein und/oder usw. und die Untergruppe 16, nämlich das hydraulische Bindemittel, hier Zement, und Wasser 15 dar. Diese Ausgangskomponenten werden in einem mechanischen Mischvorgang, im Mischer 8, miteinander zur fertigen Betonmischung 11 vermengt. Die chemischen und physikalischen Eigenschaften des Betongemisches werden in diesem Mischvorgang hauptsächlich durch das Mischungsverhältnis der Betonkomponenten beeinflusst.

Erfindungsgemäss ist es nun möglich, durch die Behandlung einer oder mehrerer Betonausgangskomponente vor dem Mischvorgang zum einen die Eigenschaften dieser Ausgangskomponente und zum anderen die Eigenschaften des fertigen Betongemisches 11 zu verändern.

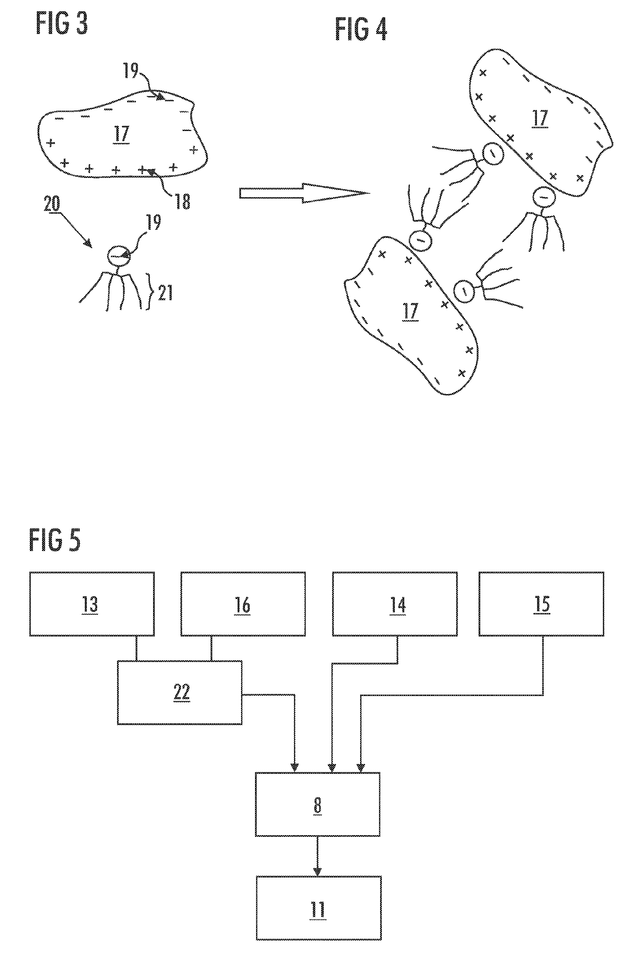

In den Figuren 3 und 4 wird die Beschichtung von Partikeln auf molekularer Ebene erläutert.

In **Figur 3** ist im oberen Bereich ein circa 0 bis 100 Mikrometer grosses Zementpartikel 17 dargestellt. Das Zementpartikel 17 weist sowohl positive 18 als auch negative 19 Ladungsträger auf, die durch ein "+" (Pluszeichen) als auch durch ein "-" (Minuszeichen) symbolisiert werden. Im unteren Bereich der Figur 3 ist ein Molekül eines Zusatzmittels, hier eines Betonverflüssigers dargestellt, in diesem Beispiel ein Polycarboxylat-Molekül. Das Polycarboxylat-Molekül besteht aus einer Hauptkette mit negativem Ladungsüberschuss und neutralen Seitenketten 21.

Wird der Betonverflüssiger mit seinen Molekülen bereits vor dem Mischvorgang im Mischer 8 dem Zement zugemengt, so kann der Zement beziehungsweise dessen Zementpartikel 17 oberflächlich beschichtet werden.

In **Figur 4** wird der "Effekt" der Betonverflüssigung erläutert. Durch die elektrische Anziehung der entgegengesetzten Ladungen + und - der Moleküle und der Zementpartikel 17 werden die Moleküle 20 des Betonverflüssigers an der Oberfläche der Zementpartikel 17 adsorbiert. Hierbei wird die negative Ladung 19 der Hauptkette des Moleküls 20 von der positiven Ladung 18 eines Zementpartikels 17 angezogen und das Molekül 20 insgesamt an ein Zementpartikel 17 gebunden. Die ausgedehnten Seitenketten 21 der gebundenen Moleküle 20 wirken wie Abstandshalter zwischen den Zementpartikeln 17. Hierdurch können die Zementpartikel 17 nicht agglomerieren beziehungsweise miteinander verklumpen. Als Lösungsmittel für den Betonverflüssiger kann beispielsweise Wasser verwendet werden. Diese Verhinderung der Reaktion/Bindung der Zementpartikel 17 untereinander ist unter dem Begriff "sterischer Effekt" bekannt. Durch diese oberflächliche Beschichtung der Zementpartikel, also des Bindemittels des Betons, wird bereits die Konsistenz des Betonausgangstoffes positiv beeinflusst. Die Wasserraufnahme des Betons wird durch den beschichteten Zement positiv beeinflusst, ausserdem wird die Verarbeitbarkeit des Betons insgesamt verbessert.

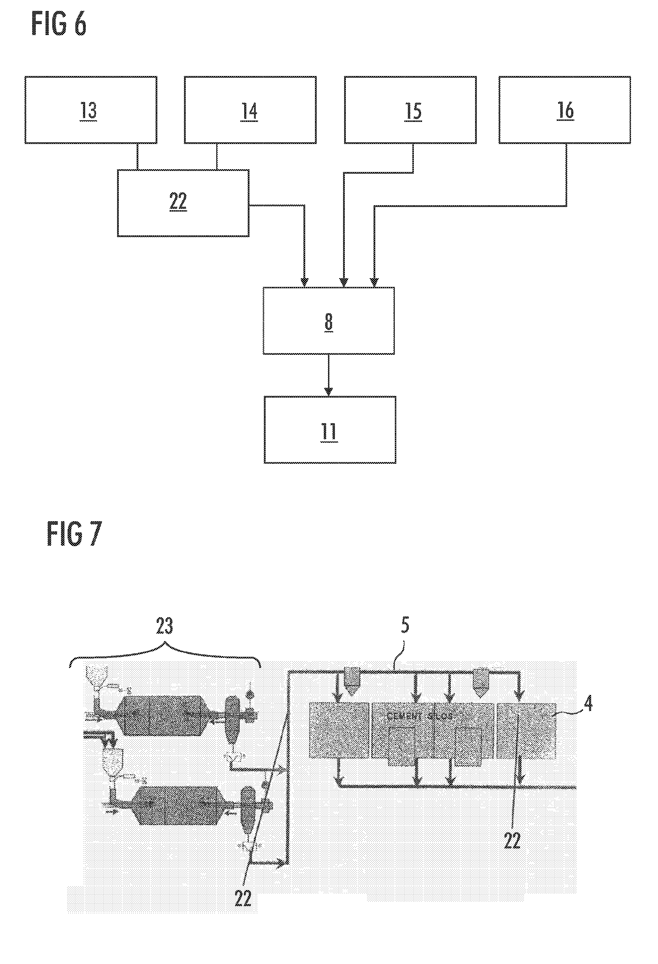

Die **Figuren 5 und 6** zeigen jeweils schematische Darstellungen, die das neue Verfahren zur Herstellung von Beton mit einem integrierten Beschichtungsvorgang verdeutlichen. Im oberen Bereich der Figur 5 stellen die vier Kästchen die Ausgangskomponenten des Betons, nämlich die Zusatzmittel 13, den ersten Grundstoff 14, den zweiten Grundstoff 16 und Wasser 15, dar. In diesem konkreten Fall ist das Zusatzmittel 13 hier ein flüssiger Betonverflüssiger, beispielweise ViscoCrete® der Firma Sika®. Natürlich können auch andere Zusatzmittel oder eine Kombination von Zusatzmitteln zugegeben werden, wie diese oben beschrieben sind. Bei dem ersten Grundstoff 14 handelt es sich um Gestein. Der zweite Grundstoff 16, der Zement, fungiert als Bindemittel für den Beton. Als weitere flüssige Komponente zum Betonverflüssiger 13 wird zusätzlich Wasser 15 beigemischt. Diese Ausgangskomponenten werden in einem mechanischen Mischvorgang, im Mischer 8, miteinander zur fertigen Betonmischung 11 vermengt. Dieser eine Mischvorgang führt dazu, dass die chemischen und physikalischen Eigenschaften des Betongemisches hauptsächlich durch das Mischungsverhältnis und die zugegeben Mengenverhältnisse beeinflusst wird. Im neuen Verfahren wird, bevor der mechanische Mischvorgang im Mischer 8 stattfindet, der Zement 16 mit dem Betonverflüssiger 13 beschichtet. Dies geschieht in Figur 5 unter dem Bezugszeichen 22, der Partikelbeschichtung. Bei der Partikel beschichtung 22 wird dem Zement 16 der flüssige Betonverflüssiger 13 zugeführt. Vorzugsweise sollten die Flüssigkeitstropfen des Betonverflüssigers 13 gegenüber den Partikeln des Zements 16 eine hohe Relativgeschwindigkeit aufweisen. Durch die hohe Relativgeschwindigkeit finden Kollisionen zwischen den Teilchen und somit eine oberflächliche Beschichtung des Zements 16 statt, wie auch in den Figuren 3 und 4 und den dazugehörigen Figurenbeschreibungen beschrieben. Es ist günstig eine turbulente Strömung, beispielsweise durch entsprechende Rohrquerschnittsgestaltung, der Teilchen zu erzeugen. Bei der Eindüsung des Betonverflüssigers, können beispielsweise sowohl Gleichstrom- als auch Gegenstrommischer verwendet werden.

In **Figur 6** wird eine weitere Variante des neuen Betonmischvorgangs schematisch dargestellt. Im Unterschied zu Figur 5 wird in Figur 6 eine Partikelbeschichtung 22 der ersten Grundstoffe 14 des Betons vorgenommen. Beispielsweise wird Gestein beschichtet. Es können aber natürlich auch alle anderen Stoffe, insbesondere Zuschlagsstoffe wie z.B. Silikafume, Flugasche, Leichtzuschlag, Schlacke, Fasermaterialien, welche dem Beton zugeführt werden sollen, vor der Verarbeitung des Betons mit einem Zusatzmittel beschichtet werden.

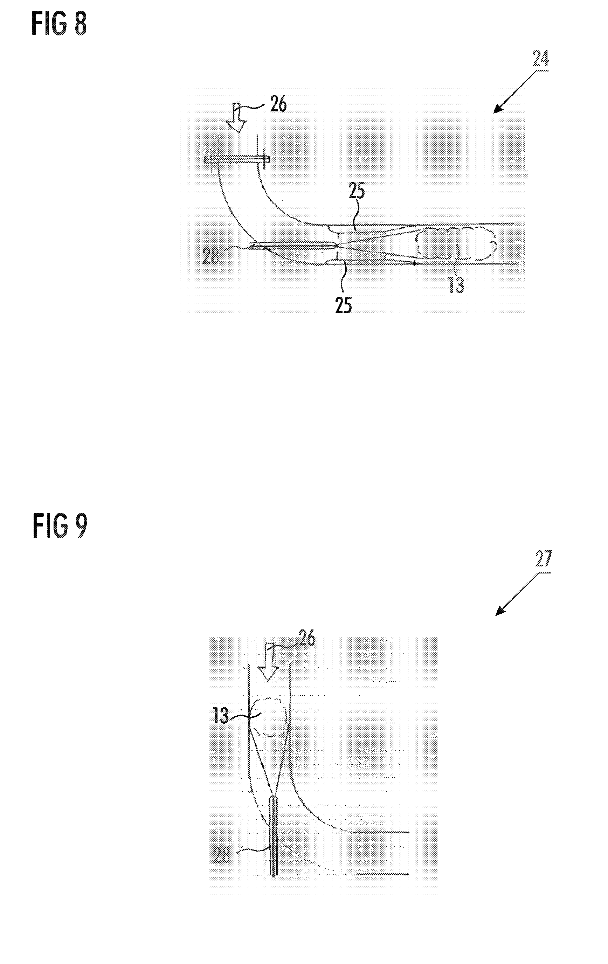

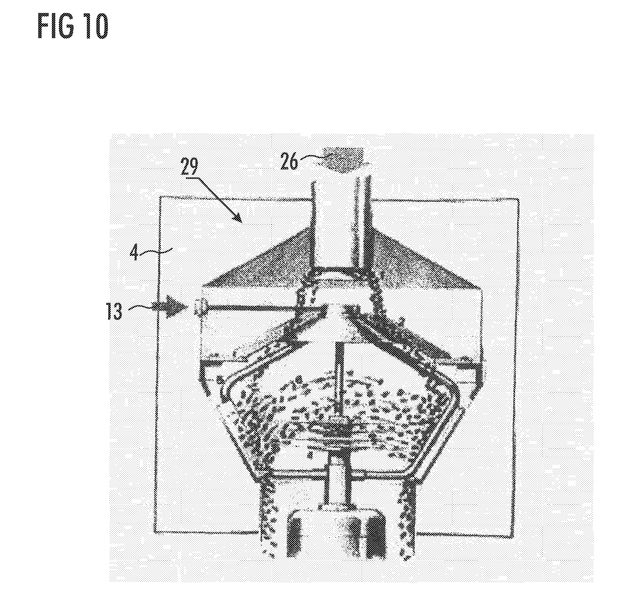

Die **Figur 7** zeigt einen Ausschnitt von einem Anlagenteil zur Zementherstellung 23 und Zementsilos 4. Im linken Bereich ist der Anlagenteil zu Zementherstellung 23 dargestellt, in dem das Zementpulver mit Gips zusammen gemahlen wird. Der fertige Zement wird mit Fördereinheiten 5 zu den vier Zementsilos 4 im rechten Bildbereich befördert, wo er dann zwischengelagert wird. Die Förderung des fertigen Zements erfolgt, wie unter Figur 1, durch Fördereinheiten 5, zum Beispiel Beförderung des Zements durch Leitungen mit Druckluft. In Figur 7 sind zwei mögliche Stellen gekennzeichnet, an denen die Partikelbeschichtung 22 des Zementes stattfinden kann. Zum einen kann es günstig sein, den Zement in den Leitungen der Fördereinheiten 5 zu beschichten. Hierzu werden in den Figuren 8 und 9 Beispiele von zwei möglichen Mischerformen jeweils in einer Schnittansicht dargestellt. Alternativ oder ergänzend dazu, kann die Partikelbeschichtung 22 auch im Zementsilo 4 stattfinden. Hierzu ist in Figur 10 ein Beispiel eines geeigneten Mischers dargestellt.

In **Figur 8** ist ein Schnitt durch einen Gleichstrommischer 24 dargestellt. Die Strömungsrichtung der Zementpartikel durch den Gleichstrommischer 24 ist durch den Pfeil 26 symbolisiert. Der Gleichstrommischer 24 besteht hier aus einem gewinkelten Rohrstück, in dem im unteren Winkelstück Querschnittsverengungen 25 eingebracht sind. Durch diese Querschnittsverengung 25 erhöht sich die Partikelgeschwindigkeit des Zements (Kontinuitätsgleichung der Hydrodynamik). lm Bereich der Querschnittsverengung 25 wird über eine Düse 28 der Betonverflüssiger 13 dem Zement zugemischt. Im Bereich der Querschnittsverengung 25 wird eine optimale Verwirbelung der Zementpartikel und den Partikeln des Betonverflüssigers 13 erreicht. Die Düse 28 kann unter verschiedenen Winkeln zu Strömungsrichtung 26 der Zementpartikel angebracht sein.

In **Figur 9** wird eine Schnittansicht durch einen Gegenstrommischer 27 dargestellt. Im Unterschied zum Gleichstrommischers 24 aus Figur 8 ist die Düse 28 gegen die Strömungsrichtung 26 der Zementpartikel ausgerichtet. Die Partikel des Betonverflüssigers 13 kollidieren mit den Zementpartikeln, wodurch eine gute oberflächliche Beschichtung der Zementpartikel stattfindet.

Die **Figur 10** zeigt in einer Schnittansicht einen Wirbelschichtmischer 29 mit Rotationszerstäuber in einem Zementsilo 4. Durch die obere Öffnung werden die Zementpartikel eingeleitet, der Pfeil 26 symbolisiert die Einströmungsrichtung der Zementpartikel. Der linke Pfeil 13 symbolisiert die Zufuhr des Zusatzmittels, beispielsweise eines Betonverflüssigers. Die Zementpartikel fallen auf einen Produktverteilerkegel und werden dadurch radial verteilt und fallen dann unter der Schwerkraft nach unten aus. Dabei werden die Zementpartikel von Flüssigkeitstropfen besprüht, die in einem Rotationszerstäuber erzeugt werden.

Insgesamt wird also durch die Erfindung ein Verfahren zur Herstellung von Beton und eine Vorrichtung zur Durchführung dieses Verfahrens zur Verfügung gestellt, bei dem/der die Qualität des Betons verbessert werden kann.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen.

### Bezugszeichenliste

- 1: Betonwerk
- 2: Vorrichtung zur Gesteinsdosierung
- 3: Behälter für Gestein
- 4: Zementsilo
- 5: Fördereinheit
- 6: Behälterwaage mit Zellenradschleuse
- 7: Zuführung von Wasser und Betonverflüssiger
- 8: Mechanischer Mischer
- 9: Förderband
- 10: Laufrichtung Förderband
- 11: Fertige Betonmischung
- 12: Transportfahrzeug
- 13: Zusatzmittel/Betonverflüssiger
- 14: erster Grundstoff/Gestein
- 15: Wasser
- 16: zweiter Grundstoff/Zement
- 17: Zementpartikel
- 18: Positive Ladung
- 19: Negative Ladung
- 20: Molekül des Betonverflüssigers
- 21: Seitenkette des Moleküls
- 22: Partikelbeschichtung
- 23: Teil der Anlage zur Zementherstellung
- 24: Gleichstrommischer
- 25: Querschnittsverengung
- 26: Strömungsrichtung Zementpartikel
- 27: Gegenstrommischer
- 28: Düse
- 29: Wirbelschichtmischer mit Rotationszerstäuber

## Patentansprüche

1. Verfahren zum Herstellen eines beschichteten Grundstoffes für eine hydraulischen Zusammensetzung (11), wobei die hydraulischen Zusammensetzung einen Grundstoff (14, 16) und Wasser (15) umfasst, wobei der Grundstoff aus mehreren Untergruppen (14, 16) bestehen kann und mindestens ein hydraulisches Bindemittel (14) umfasst und wobei zur Herstellung der hydraulischen Zusammensetzung der Grundstoff (14, 16) und das Wasser (15) in einem Mischer (8) gemischt werden, **dadurch gekennzeichnet, dass** vor dem Mischen der hydraulischen Zusammensetzung der Grundstoff (14, 16) zumindest teilweise mit einem Zusatzmittel (13) beschichtet wird.

2. Verfahren gemäss dem Patentanspruch 1, **dadurch gekennzeichnet, dass** das hydraulisches Bindemittel (14) und/oder die weiteren Untergruppen (16) durch zumindest ein Zusatzmittel (13) beschichtet werden.

3. Verfahren gemäss deinem der voranstehenden Patentansprüche 1 und 2, **dadurch gekennzeichnet, dass** als Untergruppe (16) des Grundstoffes Sand und/oder Gestein verwendet wird.

4. Verfahren gemäss deinem der voranstehenden Patentansprüche 1, 2 oder 3, **dadurch gekennzeichnet, dass** als weitere Untergruppe (16) des Grundstoffes Zusatzstoffe wie Silikafume und/oder Flugasche und/oder Leichtzuschlag und/oder Schlacke und/oder Fasern verwendet wird.

5. Verfahren gemäss einem der voranstehenden Patentansprüche 1 bis 4, **dadurch gekennzeichnet, dass** zur Beschichtung des Grundstoffes das Zusatzmittel (13) mit einer Düse (28) und/oder einem Mischer (24, 27) in die Strömung (26) der Grundstoffe (14, 16) eingedüst wird.

6. Verfahren gemäss einem der voranstehenden Patentansprüche 1 bis 5, **dadurch gekennzeichnet, dass** zur Beschichtung des Grundstoffes das Zusatzmittel (13) in Strömungsrichtung und/oder gegen die Strömungsrichtung der Grundstoffe (16) eingedüst wird.

7. Verfahren gemäss einem der voranstehenden Patentansprüche 1 bis 6, **dadurch gekennzeichnet, dass** zur Beschichtung des Grundstoffes das Zusatzmittel (13) zumindest teilweise in flüssiger Form zugesetzt wird.

8. Verfahren gemäss dem voranstehenden Patentanspruch 7, **dadurch gekennzeichnet, dass** zur Beschichtung des Grundstoffes das flüssige Zusatzmittel (13) vor der Zufuhr zerstäubt (Aerosol) und/oder zertropft (Tropfen) und/oder verdampft (Dampf) wird.

9. Verfahren gemäss einem der voranstehenden Patentansprüche 1 bis 8, **dadurch gekennzeichnet, dass** zur Beschichtung des Grundstoffes das flüssige Zusatzmittel (13) mit einem Lösungsmittel, vorzugsweise Wasser (15), gemischt zugeführt wird, wobei das Lösungsmittel nach der Zufuhr verdampft.

10. Verfahren gemäss einem der voranstehenden Patentansprüche 1 bis 9, **dadurch gekennzeichnet, dass** zur Beschichtung des Grundstoffes das Zusatzmittel (13) zumindest teilweise in Pulverform zugesetzt wird.

11. Verfahren gemäss einem der voranstehenden Patentansprüche 1 bis 10, **dadurch gekennzeichnet, dass** zur Beschichtung des Grundstoffes das Zusatzmittel (13) pneumatisch zugesetzt wird.

12. Verfahren gemäss einem der voranstehenden Patentansprüche 1 bis 11, **dadurch gekennzeichnet, dass** zur Beschichtung des Grundstoffes an der Eindüsungsstelle eine turbulente Strömung der Grundstoffe (14, 16) und/oder des eingedüsten Zusatzmittels (13) erzeugt wird.

13. Verfahren gemäss einem der voranstehenden Patentansprüche 1 bis 12, **dadurch gekennzeichnet, dass** als Zusatzmittel (13) ein Betonverflüssiger und/oder ein Fliessmittel und/oder ein Verzögerer und/oder ein Beschleuniger, wie Erstarrungs- und/oder Erhärtungsbeschleuniger, und/oder ein Stabilisierer und/oder ein Luftporenbildner und/oder ein Dichtungsmittel verwendet wird.

14. Beschichteter Grundstoff (14, 16) zur Betonherstellung, **dadurch gekennzeichnet, dass** der Grundstoff (14, 16) durch ein Verfahren gemäss einem der voranstehenden Patentansprüche 1 bis 13 hergestellt wird.

15. Zusatzmittel für die Betonherstellung, **dadurch gekennzeichnet, dass** das Zusatzmittel zumindest teilweise auf einem Grundstoff (14, 16) für die Betonherstellung angeordnet ist.

16. Zusatzmittel nach Anspruch 15, **dadurch gekennzeichnet, dass** der Grundstoff als Untergruppe mindestens ein hydraulisches Bindemittel (14) umfasst.

17. Zusatzmittel nach Anspruch 15 oder 16, **dadurch gekennzeichnet, dass** der Grundstoff als weitere Untergruppe (16) Sand und/oder Gestein und/oder Silikafume und/oder Flugasche und/oder Leichtzuschlag und/oder Schlacke und/oder Fasern umfasst.

18. Zusatzmittel nach Anspruch 15 bis 17, **dadurch gekennzeichnet, dass** das Zusatzmittel (13) ein Betonverflüssiger und/oder ein Fliessmittel und/oder ein Verzögerer und/oder ein Beschleuniger, wie Erstarrungs- und/oder Erhärtungsbeschleuniger, und/oder ein Stabilisierer und/oder ein Luftporenbildner und/oder ein Dichtungsmittel ist.

19. Verfahren zum Herstellen einer hydraulischen Zusammensetzung (11), wobei die hydraulischen Zusammensetzung einen Grundstoff (14, 16) und Wasser (15) umfasst, wobei der Grundstoff aus mehreren Untergruppen (14, 16) bestehen kann und mindestens ein hydraulisches Bindemittel (14) umfasst, wobei der Grundstoff (14, 16) und das Wasser (15) zu einem Mischer (8) strömen und dort gemischt werden, **dadurch gekennzeichnet, dass** vor dem Mischen mindestens ein Teil des Grundstoffes (14, 16) zumindest teilweise mit einem Zusatzmittel (13) beschichtet wird.

20. Verfahren gemäss dem Patentanspruch 19, **dadurch gekennzeichnet, dass** das hydraulisches Bindemittel (14) und/oder die weiteren Untergruppen (16) durch zumindest ein Zusatzmittel (13) beschichtet werden.

21. Verfahren gemäss deinem der voranstehenden Patentansprüche 19 und 20, **dadurch gekennzeichnet, dass** als Untergruppe (16) des Grundstoffes Sand und/oder Gestein und/oder Zusatzstoffe wie Silikafume und/oder Flugasche und/oder Leichtzuschlag und/oder Schlacke und/oder Fasern verwendet wird.

22. Verfahren gemäss einem der voranstehenden Patentansprüche 19 bis 21, **dadurch gekennzeichnet, dass** zur Beschichtung des Grundstoffes das Zusatzmittel (13) mit einer Düse (28) und/oder einem Mischer (24, 27) in die Strömung (26) der Grundstoffe (14, 16) eingedüst wird.

23. Verfahren gemäss einem der voranstehenden Patentansprüche 19 bis 22, **dadurch gekennzeichnet, dass** zur Beschichtung des Grundstoffes das Zusatzmittel (13) in Strömungsrichtung und/oder gegen die Strömungsrichtung der Grundstoffe (16) eingedüst wird.

24. Verfahren gemäss einem der voranstehenden Patentansprüche 19 bis 23, **dadurch gekennzeichnet, dass** zur Beschichtung des Grundstoffes das Zusatzmittel (13) zumindest teilweise in flüssiger Form zugesetzt wird.

25. Verfahren gemäss dem voranstehenden Patentanspruch 24, **dadurch gekennzeichnet, dass** zur Beschichtung des Grundstoffes das flüssige Zusatzmittel (13) vor der Zufuhr zerstäubt (Aerosol) und/oder zertropft (Tropfen) und/oder verdampft (Dampf) wird.

26. Verfahren gemäss einem der voranstehenden Patentansprüche 19 bis 25, **dadurch gekennzeichnet, dass** zur Beschichtung des Grundstoffes das flüssige Zusatzmittel (13) mit einem Lösungsmittel, vorzugsweise Wasser (15), gemischt zugeführt wird, wobei das Lösungsmittel nach der Zufuhr verdampft.

27. Verfahren gemäss einem der voranstehenden Patentansprüche 19 bis 26, **dadurch gekennzeichnet, dass** zur Beschichtung des Grundstoffes das Zusatzmittel (13) zumindest teilweise in Pulverform zugesetzt wird.

28. Verfahren gemäss einem der voranstehenden Patentansprüche 19 bis 27, **dadurch gekennzeichnet, dass** zur Beschichtung des Grundstoffes das Zusatzmittel (13) pneumatisch zugesetzt wird.

29. Verfahren gemäss einem der voranstehenden Patentansprüche 19 bis 28, **dadurch gekennzeichnet, dass** zur Beschichtung des Grundstoffes an der Eindüsungsstelle eine turbulente Strömung der Grundstoffe (14, 16) und/oder des eingedüsten Zusatzmittels (13) erzeugt wird.

30. Verfahren gemäss einem der voranstehenden Patentansprüche 19 bis 29, **dadurch gekennzeichnet, dass** als Zusatzmittel (13) ein Betonverflüssiger , ein Fliessmittel und/oder ein Verzögerer und oder ein Beschleuniger, wie Erstarrungs- und/oder Erhärtungsbeschleuniger, und/oder ein Stabilisierer und/oder ein Luftporenbildner und/oder ein Dichtungsmittel verwendet wird.
